# EUROPÄISCHE PATENTSCHRIFT

(11) **EP 3 103 664 B1**
(45) Veröffentlichungstag und Bekanntmachung des Hinweises auf die Patenterteilung: **01.11.2017**
(21) Anmeldenummer: 16173230.0
(22) Anmeldetag: 07.06.2016
(51) Int. Cl.: F24F 13/065, B60H 1/34, B60H 1/00

(54) **LUFTAUSSTRÖMER**
AIR VENT
DISPOSITIF D'ECOULEMENT D'AIR

(30) Priorität: 12.11.2015 DE 102015119562; 11.06.2015 DE 102015109235
(43) Veröffentlichungstag der Anmeldung: 14.12.2016
(62) Teilanmeldung aus: 16201263.7
(73) Patentinhaber: Dr. Schneider Kunststoffwerke GmbH, 96317 Kronach (DE)
(72) Erfinder: Friedrich, Wolfgang, 95152 Selbitz (DE); Sperschneider, Maik, 96465 Neustadt bei Coburg (DE)
(74) Vertreter: Pröll, Jürgen

(56) Entgegenhaltungen:
- EP-A1- 1 911 617
- WO-A1-00/63037
- DE-B3- 10 341 140
- GB-A- 1 310 493

## Beschreibung

Die vorliegende Erfindung betrifft einen Luftausströmer nach den Merkmalen des Oberbegriffs des Patentanspruches 1.

Es sind bereits aus dem Stand der Technik diverse Luftausströmer für Fahrzeuge, auch schienengebundene Fahrzeuge, Flugzeuge und für Belüftungsanalgen in Gebäuden bekannt.
Luftausströmer in Kraftfahrzeugen werden beispielsweise eingesetzt, um das Innere des Kraftfahrzeuges zu belüften und/oder zu klimatisieren.

Mit einem Luftausströmer sind insbesondere die Richtung und das Volumen des in den Innenraum einströmenden Luftstroms variierbar. Hierzu sind am und/oder im Luftausströmer Lamellen und/oder Einsätze und/oder Klappen vorgesehen.

Es ist im Weiteren bekannt Luftausströmer zu beleuchten oder zu hinterleuchten, damit diese auch bei Dunkelheit einfach und sicher bedienbar sind.

So ist aus der DE 20 2011 110 265 U1 eine Belüftungsvorrichtung für ein Kraftfahrzeug bekannt, wobei diese Belüftungsvorrichtung eine Luftdüse und ein Leuchtmittel besitzt. Mittels der Ausleuchtung der Belüftungsvorrichtung durch das Leuchtmittel ist für einen Nutzer erkennbar, ob die Klappen oder Einsätze der Luftdüse geschlossen oder geöffnet sind.

Aus der US 2009/0298406 A1 ist eine Belüftungsvorrichtung mit einer Lichtquelle in Form eines im Gehäuse angeordneten Lichtleiters bekannt. Mittels des Lichtleiters ist die Belüftungsvorrichtung beleuchtbar.

Aus der DE 20 118 014 U1 ist eine Luftdüse für den Auslass eines Luftstromes aus einem Luftzuführungsschacht bekannt. Diese Luftdüse weist ein Bedienelement auf, das eine Verstellung der Lamellen der Luftdüse ermöglicht. Das Bedienelement besitzt einen hinterleuchtbaren Lichtaustrittsabschnitt, der bei Dunkelheit die Ausrichtung des Bedienelements und damit die Richtung des Luftstroms erkennbar macht.

Aus GB 1 310 493 B1 ist ein weiterer Luftausströmer bekannt. Bei diesem Luftausströmer ist ein äußerer Bereich des Mittenteils des Luftausströmers beleuchtbar, wobei der Lichtstrahlen zur Beleuchtung über einen Lichtleiter geführt werden, wobei eine zentral angeordnete Welle oder Spindel einen Teil des Lichtleiters bilden.

Aus der DE 10 2013 113 319 B3 ist ein Luftausströmer mit einem Einstellsatz zur Einstellung des durch den Luftausströmer ausströmenden Luftstroms bekannt. Der Luftstrom ist durch eine Verdrehung des Einstellsatzes einstellbar. Im Weiteren sind ein erster und ein zweiter Lichtleiter vorhanden, wobei der erste Lichtleiter fest an dem Gehäuse des Luftausströmers und der zweite Lichtleiter fest am Einstellsatz befestigt sind. Der erste Lichtleiter und der zweite Lichtleiter sind gegeneinander verdrehbar und der zweite Lichtleiter ist durch den ersten Lichtleiter beleuchtbar. Durch den zweiten Lichtleiter wird ein hinterleuchtbarer Abschnitt eines Einstellsatzes des Luftausströmers beleuchtet.

Nachteilig bei den vorbekannten Luftausströmern und Luftdüsen ist, dass die Zuführung des Lichtes zur Beleuchtung der jeweiligen Elemente kompliziert ist. Die Zuführung erfolgt über Lichtleiter die am Rande der Belüftungsvorrichtung angeordnet sind und es wird daher nicht ermöglicht eine zentrale Ausleuchtung des Luftausströmers zu erreichen. Außerdem ist es schwierig die Lichtzuführung mit der erforderlichen Mechanik zur Einstellbarkeit und Bedienbarkeit des Luftausströmers zu kombinieren.

Es ist daher Aufgabe der vorliegenden Erfindung einen Luftausströmer gemäß dem Oberbegriff des Patentanspruches 1 in vorteilhafterweise weiterzubilden, insbesondere dahingehend, dass eine zentrale Beleuchtung eines Luftausströmers, ohne Beeinträchtigung der Bedienungsfunktionalität ermöglicht wird und dadurch die Funktionalität des Luftausströmers nicht negativ beeinflusst wird.

Diese Aufgabe wird anhand eines Luftausströmes mit den Merkmalen des Patentanspruches 1 gelöst. Vorteilhafte Ausgestaltungen der Erfindung ergeben sich anhand der weiteren Beschreibung, insbesondere der Beschreibung anhand eines konkreten Ausführungsbeispieles anhand von Figuren.

Die vorliegende Erfindung zeigt einen Luftausströmer, der aus einem Gehäuse mit mindestens einer Öffnung zur Zuführung eines Luftstroms und einer Öffnung zur Ausleitung des zugeführten Luftstroms, besteht. Der Luftstrom wird dem Luftausströmer aus einem Luftzufuhrschacht oder aus einer Luftzufuhrleitung in Heizungs-, Lüftungs- oder Klimaanlagen, insbesondere für Fahrgasträume in Kraftfahrzeugen, zugeführt. Der Luftausströmer ist mit seinem Gehäuse in einen Wanddurchbruch einsetzbar oder hinter einem solchen montierbar. Im Gehäuse ist ein um eine Lagerung dreh- und/oder schwenkbeweglich gelagerter Einsatz mit mindestens einer Anordnung zur Führung und/oder Ablenkung des zugeführten Luftstroms und einem mittig im Einsatz angeordnetem Element angeordnet. Der Einsatz ist mit der mindestens einen Anordnung zur Führung und/oder Ablenkung des zugeführten Luftstroms, verbunden. Die Lagerung ist auf der Mittenlängsachse des Gehäuses angeordnet. Die Lagerung erfolgt mittels eines Lagers, das aus einer Lagerschale besteht, in dem ein kugelförmiges Element liegt, das mit dem Einsatz bei einer Drehbewegung des Einsatzes in Wirkverbindung steht, jedoch bei einem Verschwenken oder Verkippen des Einsatzes mit diesem in keiner Wirkverbindung steht. Außerdem ist im Lager eine lichttechnische Kopplung zweiter Lichtleiter vorgesehen, die zur Beleuchtung des Luftausströmers dienen. Erfindungsgemäß ist die Lagerschale von zwei Lagerhalbschalen gebildet ist, wobei die zwei Lagerhalbschalen von einer Feder zumindest teilweise umschlossen sind und die Lagerhalbschalen das kugelförmiges Element, das in einer vorzugsweisen Ausgestaltung der Erfindung ein kugelförmiger Kopf ist, zumindest partiell umschießen. Der kugelförmige Kopf weist Noppen auf, die zwischen den beiden Lagerhalbschalen zu liegen kommen. Die Noppen sind zylinderförmig ausgestaltet und greifen zwischen die beiden Lagerhalbschalen. Damit erfolgt bei einem Drehen des Einsatzes, der mit den Lagerhalbschalen und damit mit der Lagerschale verbunden ist, eine Wirkverbindung zwischen den Lagerhalbschalen und dem kugelförmigen Kopf, sodass die Lagerhalbschalen und der kugelförmige Kopf beim Drehen des Einsatzes mitdrehen. Im Falle einen Kippbewegung gleiten die zwei Lagerhalbschalen um den kugelförmigen Kopf, da in diesem Fall die Noppen keine Wirkverbindung haben. Die beiden Lagerhalbschalen, die den kugelförmigen Kopf umschießen, bestehen aus zwei unterschiedlichen Kunststoffmaterialen und sind in einem 2-K-Spitzgussverfahren hergestellt. Durch diese Ausgestaltung ist eine besonders gute Stabilität der beiden Lagerhalbschalen gegeben. Das Kunststoffmaterial ist in der Weise gewählt, dass die umschließende Feder eine gute Haft und Reibreibung zu den beiden Lagerhalbschalen besitzt. Außerdem ist das Kunststoffmaterial des kugelförmigen Kopfes, das in Berührung zu den beiden Lagerhalbschalen steht aus einem anderen Kunststoffmaterial hergestellt, als das der beiden Lagerhalbschalen. Dadurch werden bei der Bedienung möglicherweise entstehende Bediengeräusche vermieden. Hierbei ist der Kunststoff des kugelförmigen Kopfes gegenüber dem Kunststoff der beiden Lagerhalbschalen entweder hart oder weich gewählt.

In einer weiteren vorteilhaften Ausgestaltung der Erfindung ist vorgesehen, dass die Lagerschale mit dem Einsatz verbunden ist und die Lagerschale Bewegungen des Einsatzes mit diesem gemeinsam ausführt.

In einer vorteilhaften Ausgestaltung der Erfindung ist vorgesehen, dass auf den Innenseiten der beiden die Lagerschale bildenden Lagerhalbschalen mindestens jeweils eine Kunststoffschicht angeordnet ist, wobei die Kunststoffschicht aus silikonartigem Kunststoff besteht.

In einer vorteilhaften Ausgestaltung der Erfindung ist vorgesehen, dass die Ausgestaltung und die Materialwahl der Kunststoffschichten, das Material der Oberfläche des kugelförmigen Kopfes und die auf die Lagerhalbschalen einwirkende Kraft der Feder die Bedienkraft, welche zur Verdrehung, Verkippung und/oder Verschwenken des Einsatzes aufzuwenden ist, definieren. Natürlicherweise wird die Bedienkraft auch von der Flexibilität des Einsatzes im Bereich der Kugelkopfaufnahme beeinflusst

In einer weiteren Ausgestaltung, die jedoch nicht Teil der Erfindung ist, ist vorgesehen, dass die Federkraft der Feder über eine Einstellvorrichtung, die von außerhalb des Gehäuses des Luftausströmers zugänglich ist, einstellbar ist. Damit kann die Bedienkraft auch nach dem Zusammenbau des Luftausströmers eingestellt und verändert werden.

In einer vorteilhaften Ausgestaltung der Erfindung ist vorgesehen, dass die Feder eine C-förmige Feder ist.

In einer vorteilhaften Ausgestaltung der Erfindung ist vorgesehen, dass am kugelförmigen Kopf an der der Öffnung zur Zuführung eines Luftstroms zugewandten Seite eine Welle fest angeordnet ist und am Ende der Welle sich ein Zahnrad befindet. In einer weiteren vorteilhaften Ausgestaltung der Erfindung ist vorgesehen, dass die Welle eine Hohlwelle ist und die Welle mit ihrer Mittenlängsachse auf der Mittenlängsachse des Gehäuses des Luftausströmers angeordnet ist, die Welle seitliche Aussparungen aufweist und die Welle über Haltestege im Gehäuse gestützt und in Position gehalten und drehbar gelagert ist.

In einer vorteilhaften Ausgestaltung der Erfindung ist vorgesehen, dass der kugelförmige Kopf ein Hohlkopf ist und an der der Öffnung zur Ausleitung des zugeführten Luftstroms zugewandten Seite einen Kugelring ausbildet und der Hohlraum des kugelförmigen Kopfes in den Hohlraum der Welle übergeht. Hierbei ist es besonders vorteilhaft, wenn der Durchmesser des Hohlraumes der Welle geringfügig größer ist, als der Durchmesser des Lichtleiters, der in den Hohlraum einfühbar ist und der Übergang zwischen dem Hohlraum der Welle und dem Hohlraum des kugelförmigen Kopfes einen nahezu geleichen Durchmesser besitzen. Dadurch wird der Lichtleiter gestützt und sicher gehalten und geführt.

In einer vorteilhaften Ausgestaltung der Erfindung ist vorgesehen, dass der Einsatz einen ersten und einen zweiten Drehanschlag besitzt, die den Bereich, in dem der Einsatz verdrehbar ist, definieren und wobei der Drehbereich zum einen auf das Zahnrad der Welle und zum andern auf die Aussparungen der Welle angepasst ist.

Vorteile und Zweckmäßigkeiten sind der nachfolgenden Beschreibung in Verbindung mit der jeweiligen Figur zu entnehmen.

Die nachfolgende Beschreibung der Erfindung anhand eines konkreten Ausführungsbeispiels stellt keine Limitierung der Erfindung auf dieses konkrete Ausführungsbeispiel dar.

Es zeigt:
- Fig. 1: eine perspektivische Darstellung eines Luftausströmers;
- Fig. 2: eine Frontansicht eines Luftausströmers;
- Fig. 3: einen Schnitt durch einen Luftausströmer;
- Fig. 4: eine Detailansicht eines Luftausströmereinsatzes in perspektivischer Darstellung;
- Fig. 5: eine weitere perspektivische Darstellung eines Luftausströmereinsatzes;
- Fig. 6: eine weitere perspektivische Frontansicht eines Luftausströmereinsatzes;
- Fig. 7: eine perspektivische Rückansicht eines Luftausströmereinsatzes;
- Fig. 8: eine weitere perspektivische Ansicht eines Luftausströmereinsatzes;
- Fig. 9: eine Detaildarstellung eines Luftausströmereinsatzes;
- Fig. 10: eine Detaildarstellung eines Luftausströmereinsatzes im Bereich eines Lagerelementes;
- Fig. 11: eine Detaildarstellung eines Luftausströmereinsatzes im Bereich eines Bremselementes;
- Fig. 12: eine Detaildarstellung eines Luftausströmereinsatzes im Bereich eines Lagerkopfes und einer Welle;
- Fig. 13: eine weitere Detaildarstellung eines Luftausströmereinsatzes im Bereich eines Lagerkopfes und einer Welle;
- Fig. 14: eine Frontansicht auf einer Lagerkopf; und
- Fig. 15: ein Lichtleitelement.

Sämtliche in den Anmeldeunterlagen offenbarte Merkmale werden als erfindungswesentlich beansprucht, sofern sie einzeln und/oder in Kombination gegenüber dem Stand der Technik neu sind.

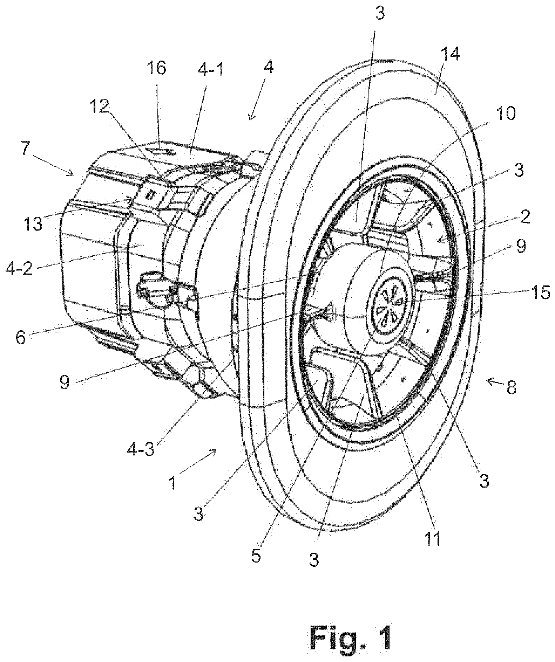

Es werden in der Figurenbeschreibung zu den Figuren Fig. 1 bis Fig. 15 für gleiche Elemente gleiche Bezugszeichen verwendet. Dies dient der besseren Verständlichkeit und Übersichtlichkeit der Figurenbeschreibung. Bezugszeichen sind in den jeweiligen Figuren nur dann verwendet, wenn sie für die Beschreibung der Erfindung im Zusammenhang mit der jeweiligen Figur von Bedeutung sind.

In Fig. 1 ist ein erfindungsgemäßer Luftausströmer 1 in perspektivischer Ansicht dargestellt. Hierbei sind aber nur die Elemente dargestellt, die für das Verständnis der Erfindung erforderlich sind. Der Luftausströmer 1 weist ein Gehäuse 4 auf. Das Gehäuse 4 weist eine Öffnung 7 zur Zuführung eines Luftstroms sowie eine Öffnung 8 zur Ausleitung des über die Öffnung 7 in das Gehäuse 4 eingeleiteten Luftstroms auf. Im Gehäuse 4, im Bereich der Öffnung 8 zur Ausströmung des zugeführten Luftstromes, ist ein Einsatz 2 eingesetzt, der im Gehäuse 4 des Luftauströmers 1 um einen vordefinierten Punkt verdrehbar, verschwenkbar und kippbar ist. Dieser Punkt liegt zentral und mittig auf der Längsachse, die das Gehäuse 4 mittig durchläuft. In diesem Drehpunkt ist ein Lager 6 angeordnet, das diese Bewegungen des Einsatzes ermöglicht.

Das Gehäuse 4 weist mehrere Teilgehäuse 4-1, 4-2, 4-3 auf, die jeweils miteinander mechanisch über Klipse 12 und gegenangeordnete Nasen 13 verbindbar sind. Beim Zusammenstecken der jeweiligen Gehäuseteile 4-1, 4-2, 4-3, die das Gehäuse 4 bilden, schnappen dann die Klipse 12, die an einem der Gehäuseteile 4-1; 4-2; 4-3 abgeordnet sind über die entsprechenden Nasen 13, die an dem jeweiligen anderen Gehäuseteil 4-1; 4-2; 4-3, angeordnet sind, ein und verbinden die Gehäuseteile 4-1, 4-2, 4-3 kraft- und formschlüssig miteinander. Auf diese Weise können relativ lange Gehäuse 4 gebildet werden, ohne das die hierzu notwendigen Formen zur Herstellung der Gehäusehälften 4-1, 4-2, 4-3 eine besonders großvolumige Ausführung benötigen. Demgemäß ist auch die Länge des Gehäuses 4 in Längsachse des Gehäuses 4 variabel und jeweils an einen entsprechenden Luftzuführungsschacht in einem Kraftfahrzeug und die dortige Luftzuführungsleitung anpassbar.

Das Gehäuse Teil 4-3 weist an seiner Außenkontur eine kugelabschnittsmäßige Ausformung auf, in der von der Vorderseite der Einsatz 2, der ebenfalls eine entsprechende formgemäße Ausgestaltung hat, einsetzbar ist.

Im Gehäuse 4 ist mindestens eine entsprechende Aufnahme vorgesehen, in welcher und auf welcher der Einsatz 2 entsprechend lagert und welche als Widerlager dient. Diese sind in Fig. 1 nicht dargestellt.

Der Einsatz 2 besitzt Lamellen 3, die in Form von Finnen ausgestaltet sind.
Diese verlaufen vom äußeren Innenrand des Einsatzes 2 in Richtung dessen Zentrum und sind symmetrisch zueinander in regelmäßigen Abständen im Einsatz 2 angeordnet. Diese Lamellen 3 dienen zur Führung und Ablenkung des Luftstromes.

Der Einsatz 2 ist drehbar, schwenkbeweglich und kippbar im Gehäuse 4 angeordnet, sodass der Luftstrom, der aus der Luftaustrittsöffnung 8 heraustritt, in seiner Orientierung und Richtung beeinflussbar ist.

Die Lamellen 3 sind fest mit dem Einsatz 2 verbunden, in einer vorteilhaften Weiterbildung der Erfindung sind die Lamellen 3 mit dem Einsatz 2 mittels einer Verklipsung verbunden. Der Einsatz 2 weist mindestens einen Verbindungssteg 9 auf, in der Ausführung gemäß Fig. 1 sind es zwei Verbindungsstege 9, welche ebenfalls in Form von Finnen ausgestaltet sind, und mit einer Aufnahme 10, die in der Mitte des Einsatzes 2 angeordnet ist, fest verbunden sind und die Aufnahme 10, die eine ovale Form besitzt, fest mit dem Einsatz 2 verbinden. In die Aufnahme 10 ist frontseitig ein Bedienelement 5 einsetzbar, das in seiner Frontseite Durchgangsöffnungen 15, die in vorteilhafter Ausgestaltung als Löcher realisiert sind, besitzt.
Alternativ kann das Bedienelement 5, dass die Form der Aufnahme 10 aufnimmt und in dieser einsteckbar und mechanisch befestigbar ist, aus lichtdurchlässigen, eingefärbten oder farbneutralen Kunststoff gefertigt sein. Das Bedienelement kann auch nur eine Sichtblende oder ein Zierelement sein.

Das Bedienelement 5 dient zum einen als Bedienelement zur Verschwenkung, Verkippung und Verdrehung des Einsatzes 2 im Gehäuse 4. Außerdem kann im Bedienelement 5 ein elektrischer Schalter oder Taster angeordnet sein, mittels dessen Betätigung die Beleuchtung des Luftausströmers 1 aktivierbar ist.

In einer vorteilhaften Ausgestaltung der Erfindung ist der Schalter bzw. Tasters in Form eines kapazitiven Sensorelements ausgebildet.

Im Frontbereich des Einsatzes 2 ist ein Ring 11 angeordnet, der den Einsatz 2 umgibt und ebenfalls aus beleuchtbaren und lichtdurchlässigen Kunststoff besteht. Dieser Ring 11 ist ebenfalls beleuchtbar.

Im Weiteren ist ein weiterer Ring 14 vorgesehen, der das Gehäuse 4 des Luftausströmers 1 im vorderen Bereich umschließt und sogleich als Widerlager bei einem Einbau in ein Armaturenbrett eines Kraftfahrzeug dient und die Einbautiefe bzw. die Größe des Bereiches, der dem Armaturenbrett übersteht, definiert. Beim Einsetzen des Gehäuses 4 des Luftausströmers 1 in eine Aussparung in einem Armaturenbrett kann die Rückseite des Ringes 14 als Widerlager zum Armaturenbrett wirken.

Im Weiteren sind am Gehäuse 3 Befestigungsvorrichtungen vorgesehen, mittels welcher das Gehäuse 4 des Luftausströmers 1 im Armaturenbrett eines Kraftfahrzeuges befestigbar ist. Diese Befestigungsvorrichtungen sind in Fig. 1 nicht dargestellt.

Es ist zumindest an einem Gehäuseteil 4-1 des Gehäuses 4 ein Einbaurichtungshinweis 16 vorhanden. Dieser zeigt die Einbaurichtung des Luftausströmers 1.

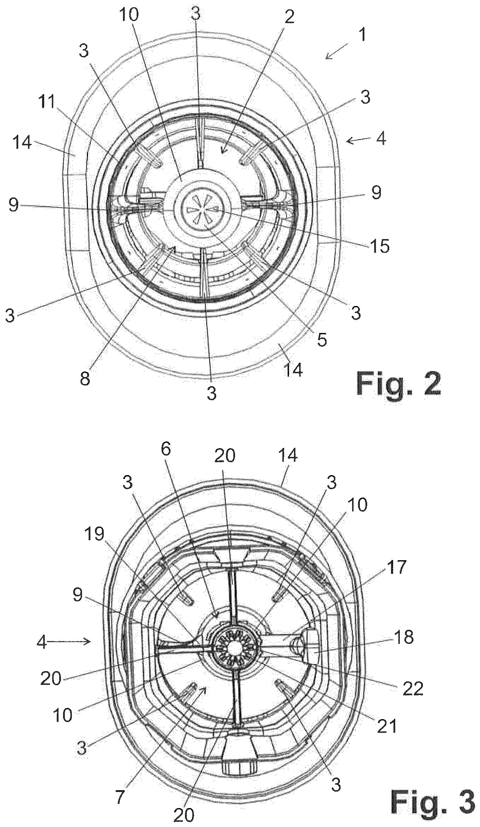

In Fig. 2 ist eine Frontansicht des Luftausströmers 1 dargestellt. Die Lamellen 3, in Form von Finnen, sind in den Einsatz 2 angeordnet und bilden mit dem Einsatz 2 eine Einheit. Die Verbindungsstege 9 dienen sowohl zur Luftleitung in Form von Lamellen als auch zur Halterung der Aufnahme 10 im Einsatz 2. In der Aufnahme 10 ist das Bedienelement 5 einsetzbar. Der Ring 14 begrenzt das Gehäuse 4 im Frontbereich. Der beleuchtbare Ring 11 wird mittelbar durch Licht, das über eine Lichtleiter im Gehäuse 4 geleitet wird, beleuchtet.

Der Einsatz 2 ist über ein in Fig. 2 nicht dargestelltes Lager im Gehäuse 4 gelagert.

Fig. 3 zeigt eine Rückansicht auf den Luftausströmer 1. Es ist das Gehäuse 4 mit dem Ring 14 dargestellt. Die Lamellen 3, die fest mit Einsatz 2 verbunden sind, sind ebenfalls dargestellt. Die Verbindungsstege 9 im Einsatz 2 fixieren die Aufnahme 10. In der Aufnahme 10 ist eine Ausnehmung 19, die in der Ausgestaltung gemäß Fig. 3 ein Durchbruch ist, vorhanden. In diese Aufnahme 19 ist das Bedienelement 5, dass in der Fig. 3 nicht dargestellt ist, von der Frontseite des Luftausströmers 1 einsetzbar.

Es ist eine Welle 21 vorhanden, welche sich in Richtung der Öffnung 7 zur Zuführung des Luftstromes erstreckt und in das Lager 6 hineinreicht. Die Mittellängsachse der Welle 21 verläuft auf der Mittellängsachs des Gehäuses 4. An einem Ende ist an der Welle 21 ein Zahnrad 22 angeordnet. Die Welle 21 steht über einen im Lager 6 gelagerten kugelhalbschalenförmigen Kopf, der in Fig.3 nicht dargestellt ist, mit dem Bedienelement 5 und dem Einsatz 2 mechanisch in Verbindung (in Wirkverbindung). Ein Drehen des Einsatzes 2 bewirkt ein Mitdrehen der Welle 12. Das am Zahnrad 22 entsprechend weiter angeordnetes Zahnrad oder Getriebe wird von dem Zahnrad 22 durchkämmt.

Die Welle 21 ist über Haltestege 20 im Gehäuse 4 drehbar gelagert gehalten.

In der Darstellung gem. Fig. 3 ist auf der rechten Seite des Gehäuses 4 ein erster Lichtleiter 17 dargestellt, der von der rechten Seite in die Welle 21, die eine Hohlwelle ist, eingeführt wird. Hierzu weist die Welle 21 Aussparungen auf, über welche der erste Lichtleiter 17 in die Welle 21 - in deren inneren Hohlraum - einfügbar ist. Im Bereich der Zuführung des ersten Lichtleiters 17 in den Hohlraum der Welle 21 durchläuft dieser eine Biegung in Richtung der Luftausströmöffnung 8.

Das Ende der Welle 21 weist, wie bereits beschrieben, in Richtung der Luftzuführungsöffnung 7 ein Zahnrad 22 auf, dessen Zähne ein Gegenzahnrad durchkämmen, das auch als Getriebe ausgestaltet sein kann. In einer vorteilhaften Ausgestaltung der Erfindung ist die Welle 21 als Kardanwelle ausgestaltet, und über die Welle 21, die mit dem Bedienelement 5 und dem Einsatz 2 in Verbindung steht, kann die Welle 21 und das Zahnrad 22 entsprechend gedreht werden und damit im hinteren Teil des Luftausströmers 1 angeordnete Klappen oder Lamellen in bekannter Weise verstellt werden.

Der Einsatz 2 besitzt einen ersten und einen zweiten Drehanschlag, die den Bereich, in dem der Einsatz 2 verdrehbar ist definieren. Dieser Drehbereich ist zum einen auf das Zahnrad 22 der Welle 21 und den Aussparungen der Welle 21, über welche der erste Lichtleiter 17 in den Hohlraum der Welle 21 eingefügt wird, angepasst.

Zwischen dem ersten und einen zweiten Drehanschlag ist ein Betätungsbereich zwischen 60 Grad bis zu 95 Grad möglich.

Bei Erreichen des ersten Drehanschlages ist die über die Welle 21 gekoppelte Schließklappe vollständig geschlossen, bei Erreichen des zweiten Drehanschlages ist die über die Welle 21 gekoppelte Schließklappe vollständig geöffnet.

Am Rand des Gehäuses 4 ist eine Elektronikeinheit 18 vorgesehen. In dieser Elektronikeinheit 18 kann eine LED angeordnet sein, oder ein sonstiges lichtimitierendes Element; dessen abgestrahltes Licht wird über eine entsprechende Einspeisevorrichtung in den ersten Lichtleiter 17 eingekoppelt.

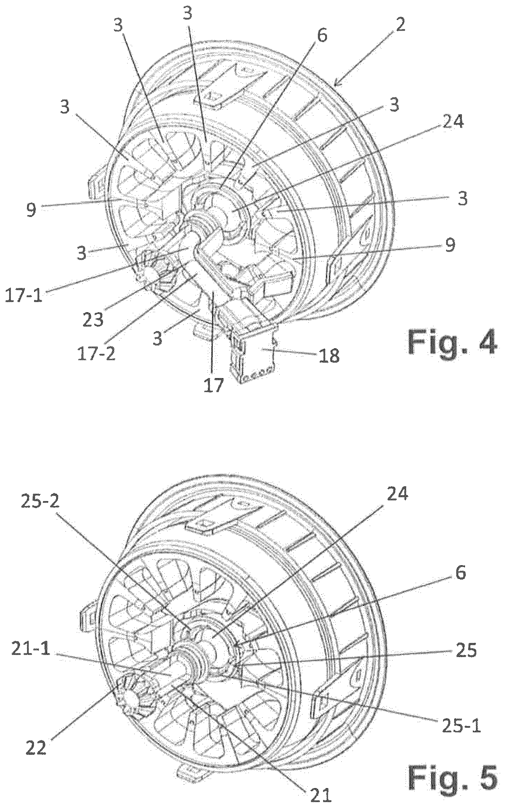

In Fig. 4 ist eine Detailansicht des Einsatzes 2 des Luftausströmer 1 in perspektivischer Ansicht dargestellt.

Es sind die Lamellen 3 und die Verbindungsstege 9 dargestellt. Das Lager 6 ist wird von zwei Halbschalen gebildet, die einen kugelförmigen Kopf 24, der mit der Welle 22 in Verbindung steht, an dessen Kugelrand aufnehmen. Die Form des kugelförmigen Kopfes 24 wird von den zwei Halbschalen teilweise bzw. partiell formschlüssig umschlossen.

Die Mittenachse des kugelförmigen Kopfes 24 und die Mittenachse des ersten Lichtleiters 17 liegen auf der Längsmittelachse des Gehäuses 4.

In Fig. 5 ist eine weitere perspektivische Darstellung eines Einsatzes 2 eines Luftausströmers 1 dargestellt; der erste Lichtleiter 17 aus Fig. 4 ist nicht dargestellt. Es ist aber der Hohlraum 21-1 in der Welle 21 dargestellt, in den der erste Lichtleiter 17 einfügbar ist.

Das Lager 6 besteht aus einer Lagerschale 25, die von zwei Lagerschalen gebildet ist, in welcher der kugelförmige Kopf 24 zu liegen kommt. An den kugelförmigen Kopf 24 ist die Welle 21 angeordnet, welche die Drehbewegung des Einsatzes 2 über das Zahnrad 22 nach hinten an eine angebundene Schließklappe leitet.

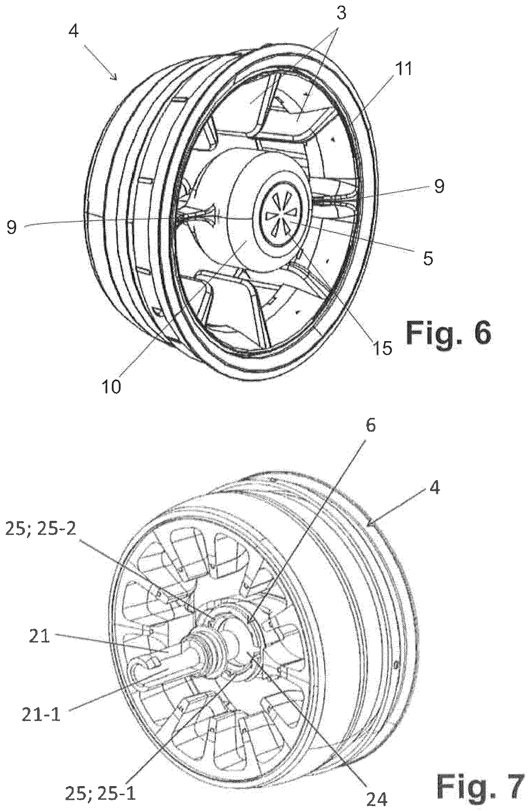

In Fig. 6 ist eine weitere perspektivische Darstellung eines Einsatzes 2 eines Luftausströmers 1 dargestellt. Der Ring 14 von Fig. 1 ist nicht vorhanden, jedoch ist der beleuchtbare Ring 11 und die Lamellen 3 sowie die Verbindungsstege 9 mit der Aufnahme 10 und einem in die Aufnahme 10 eingefügtem Bedienelement 5 mit den Durchbrüchen 15 dargestellt. Über den ersten Lichtleiter 17 eingekoppeltes Licht, wird über den kugelförmigen Kopf 24, der in Fig. 6 nicht dargestellt ist, abgestrahlt und tritt z.B. durch die Öffnungen 15 des Bedienelements 5 aus. Im Weiteren ist vorgesehen, dass in den Verbindungsstegen 9 weitere Lichtleiter angeordnet sind, welche das Licht, dass in den kugelförmigen Kopf 24 eingeleitet wird, auch an den beleuchtbaren Ring 11 Ring leiten, sodass dieser ebenfalls hinterleuchtet und durchleuchtet wird.

In Fig. 7 ist eine perspektivische Rückansicht eines Einsatzes 2 dargestellt. Es ist das Lager 6 mit den beiden Lagerschalen 25-12, 25-2 der Lagerschale 25 dargestellt. Im Weiteren ist die Welle 21 dargestellt, welche eine Drehbewegung über das Zahnrad, dass nicht dargestellt ist, nach hinten leitet. Es ist dargestellt, dass die Welle 21 eine Hohlwelle ist, mit dem Hohlraum 21-1.

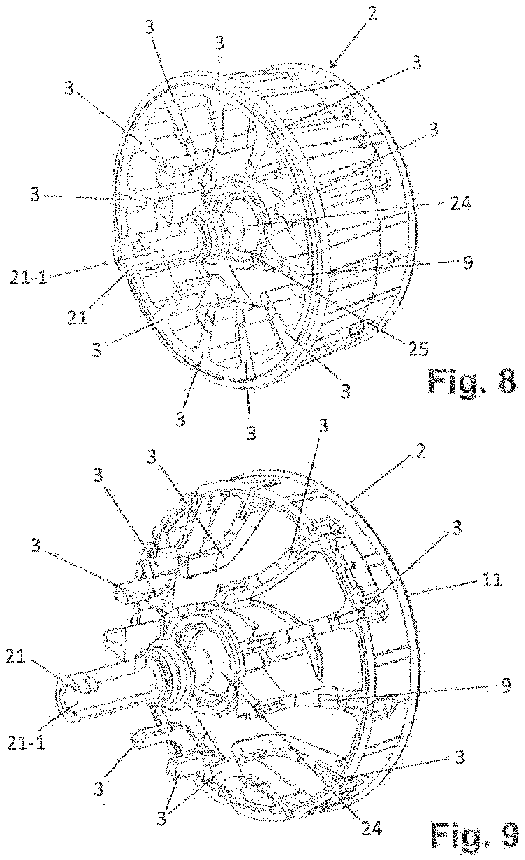

In Fig. 8 ist eine weitere perspektivische Darstellung des Einsatzes 2 dargestellt, wobei hier insbesondere die Lagerschale 25, die zumindest zwei geteilt ist, dargestellt ist. Es ist außerdem der Hohlraum 21-1 der Welle 21 dargestellt.

In Fig. 9 ist eine weitere perspektivische Darstellung eines Einsatzes 2 dargestellt.
Die geteilte Lagerschale 25 ist Bestandteil des Einsatzes 2.

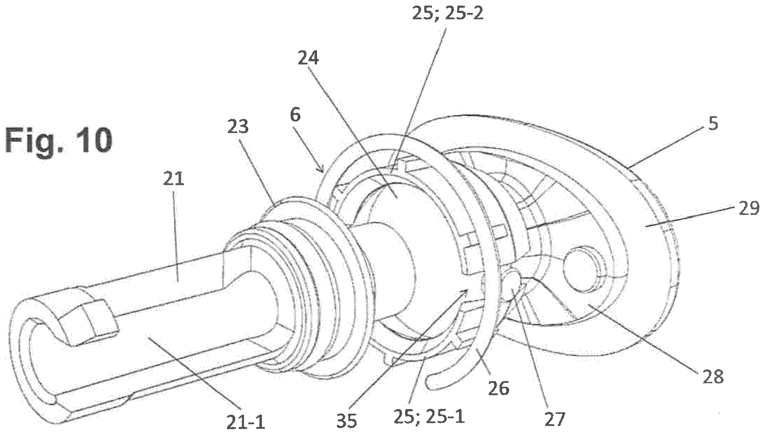

In Fig. 10 ist eine Detaildarstellung eines Einsatzes 2 eines Luftausströmers 1 im Bereich des Lagers 6 dargestellt. Das Lager 6 besitzt eine Lagerschale 25, die aus zwei Lagerschalen 25-1 und 25-2 besteht, die von einer Feder 26 umschlossen sind. Bei der Feder 26 handelt es sich vorteilhafterweise um eine C-förmige Feder. Die Feder 26 beaufschlagt die Lagerschalen 25-1, 25-2 mit einer voreinstellbaren Kraft, mit welcher der kugelförmigen Kopf 24 von den Lagerschalen 25-1, 25-2 umschlossen ist. Der kugelförmige Kopf 24 weist Noppen 27 auf, die in Aussparungen 33 zwischen den beiden Lagerschalen 25-1 und 25-2 liegen und den kugelförmigen Kopf 24 im Lager 6 halten. Die Noppen 27 sind vorteilhaft zylinderförmig ausgestaltet.

Das Bedienelement 5 besteht aus einer Umrandung 29 in welche ein zweiter Lichtleiter 28 einfügbar ist. Zwischen dem zweiten Lichtleiter 28 und der Umrandung 27 wird eine mechanische Haltekraft durch einklipsen desselbigen erwirkt.

Die Welle 21, die als Hohlwelle mit dem Hohlraum 21-1 ausgeführt ist, und in welcher der erste Lichtleiter 17 zu liegen kommt, ist ebenfalls dargestellt.

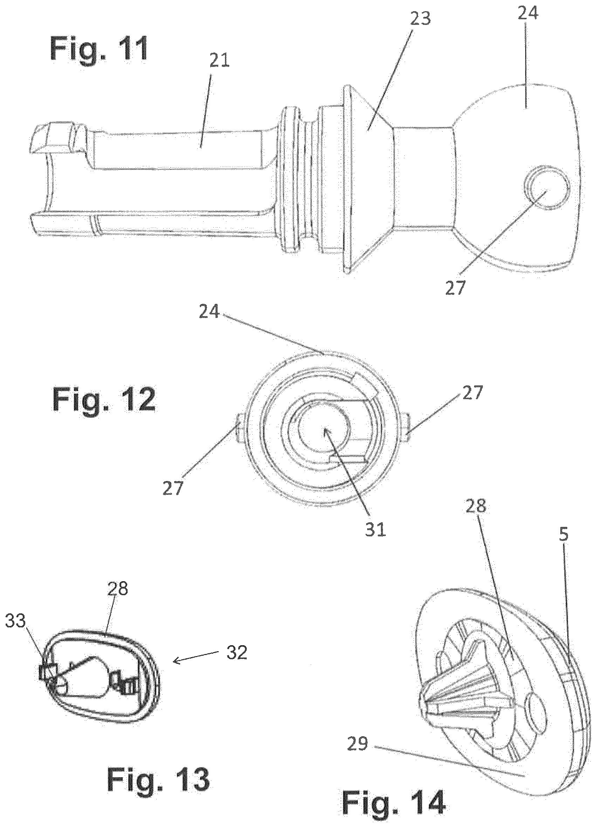

In Fig. 11 sind die beiden Lagerhalbschalen 25-1 und 25-2 dargestellt. Auf jeder der Innenseite der Lagerhalbschalen 25-1, 25-2 ist mindestens eine Kunststoffschicht 29-1, 29-1 angeordnet. Diese Kunststoffschichten 29-1, 29-2 fungieren als Bremselemente und sind in vorteilhafter Ausgestaltung der Erfindung aus Silikon hergestellt, die die Form der Lagerschalen 25-1, 25-2 aufnehmen.

Über die Ausgestaltung und die Materialwahl dieser Kunststoffschichten 29-1, 29-2, und dem Material des kugelförmigen Kopf 24 ist unter Berücksichtigung der Federkraft der Feder die Bedienkraft einstellbar, welche zur Verdrehung, Verkippung und/oder Verschwenken des Einsatzes 2 aufzuwenden ist.

Durch diese Anordnung und die Federkraft der Feder ist es nunmehr möglich die Kraft, die notwendig ist, um den Einsatz 2 im Gehäuse 4 um das Lager 6 zu drehen, zu schwenken bzw. zu verkippen einstellbar. Die mechanische Reibkraft, die zwischen der Lagerschale 25 und dem kugelförmigen Kopf 24 ausgeübt wird, ist damit variierbar. In die Aussparungen 35 kommen die Noppen des kugelförmigen Kopfes zu liegen.

In Fig. 12 ist die Welle 21 und der mit ihr verbundene kugelförmige Kopf 24 in perspektivischer Ansicht dargestellt.
Auf der Welle 21 ist eine Wulst 23 angeordnet. Die Noppen 27 des kugelförmigen Kopfes 24 sind einander gegenüberliegend angeordnet.

In Fig. 13 ist die Welle 21 mit dem kugelförmigen Kopf 24 in einer Seitenansicht dargestellt. Hierbei ist ersichtlich, dass der kugelförmige Kopf 24 in vorteilhafter Ausgestaltung der Erfindung ein Kugelsegment ist, das das Lager 6 mit der Lagerschale 25 umschließt.

Durch die Ausgestaltung als Kugelsegment, wobei das Kugelsegment ein Hohlkugelsegment ist, kann rückseitig der erste Lichtleiter 17, der nicht dargestellt ist, eingeführt werden und im Frontbereich der zweite Lichtleiter 28 eingefügt und mit dem ersten Lichtleiter 17 lichttechnisch gekoppelt werden.

In Fig. 14 ist eine Frontansicht auf den kugelförmigen Kopf 24 dargestellt. Es ist ersichtlich, dass dieser als Hohlkörper ausgestaltet ist, mit einem rückwärtigen Durchbruch 31, durch welchen der erste Lichtleiter 17 in den kugelförmigen Kopf 24 hineinragt. Es ist vorteilhaft, wenn der Durchbruch 31 in seinem Durchmesser nur wenig größer als der Durchmesser des ersten Lichtleiters 17 ist. Von der dem ersten Lichtleiter 17 gegenüberliegenden Seite ist der zweite Lichtleiter 28 in den kugelförmigen Kopf 24 einsetzbar. Die beiden Noppen 27 sind einander gegenüberliegend angeordnet.

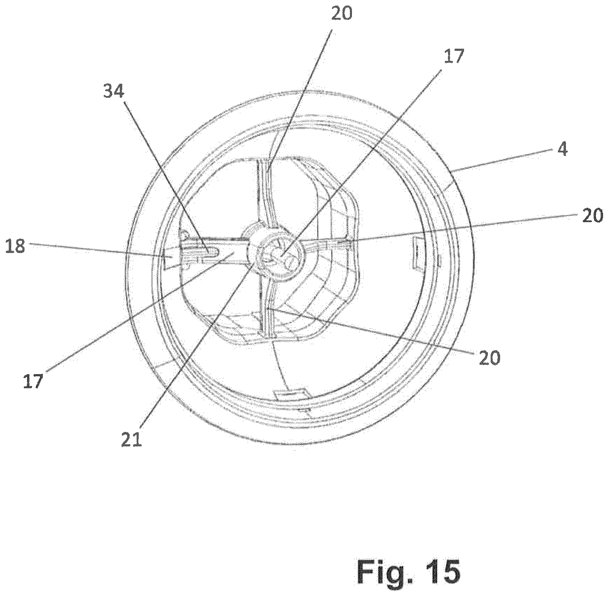

In Fig. 15 ist der zweite Lichtleiter 28 dargestellt. Dieser nimmt in seinem Frontbereich 32 die Form des Bedienelements 5 auf und ist in das Bedienelement 5 einklipsbar. Im Rückbereich, bildet dieser eine konvexe Flächenform 33 aus, die, in beschriebener Weise, mit dem Einsatz 2 um den ersten Lichtleiter 17 verdrehbar, verschwenkbar und kippbar ist.

Durch die Ausgestaltung des ersten Lichtleiters 17 in konkaver Form und die Angrenzung des zweiten Lichtleiters 28 an den ersten Lichtleiter 17 in konvexer Form ist es möglich, die entsprechende Dreh-, Kipp- und Schwenkbewegung, ohne Einfluss auf die beiden Lichtleiter 17, 28 zu ermöglichen. Die beiden Lichtleiter 17, 28 berühren sich nicht. Der erste Lichtleiter 17 koppelt Licht in den zweiten Lichtleiter 28 ein.

## Patentansprüche

1. Luftausströmer (1) bestehend aus einem Gehäuse (4) mit mindestens einer Öffnung (7) zur Zuführung eines Luftstroms und einer Öffnung (8) zur Ausleitung des zugeführten Luftstroms, wobei der Luftstrom dem Luftausströmer (1) aus einem Luftzufuhrschacht oder aus einer Luftzufuhrleitung in Heizungs-, Lüftungs- oder Klimaanlagen, insbesondere für Fahrgasträume in Kraftfahrzeugen, zuführbar ist, und der Luftausströmer (1) mit dem Gehäuse (4) in einen Wanddurchbruch einsetzbar oder hinter einem solchen montierbar ist, wobei im Gehäuse (4) ein um eine Lagerung dreh- und/oder schwenkbeweglich gelagerter Einsatz (2) mit mindestens einer Anordnung (3) zur Führung und/oder Ablenkung des zugeführten Luftstroms und einem mittig im Einsatz (2) angeordnetem Element (5) angeordnet ist, das mit der mindestens einen Anordnung (3; 9) zur Führung und/oder Ablenkung des zugeführten Luftstroms, verbunden ist, und wobei die Lagerung auf der Mittenlängsachse des Gehäuses (4) angeordnet ist, die Lagerung mittels eines Lagers (6) erfolgt, das aus einer Lagerschale (25) besteht, in dem ein kugelförmiges Element (24) liegt, das mit dem Einsatz (2) bei einer Drehbewegung des Einsatzes (2) in Wirkverbindung steht, jedoch bei einem Verschwenken oder Verkippen des Einsatzes (2) in keiner Wirkverbindung steht und dass im Lager (6) eine lichttechnische Kopplung zweier Lichtleiter (17, 28), die zur Beleuchtung des Luftausströmers (1) dienen, erfolgt, **dadurch gekennzeichnet, dass** die Lagerschale (25) von zwei Lagerhalbschalen (25-1, 25-2) gebildet ist, wobei die zwei Lagerhalbschalen (25-1, 25-2) von einer Feder (26) zumindest teilweise umschlossen sind und die Lagerhalbschalen (25-1, 25-2) einen kugelförmigen Kopf (24) umschießen, wobei der kugelförmige Kopf (24) Noppen (27) aufweist, die zwischen den beiden Lagerhalbschalen (25-1, 25-2) liegen und wobei die zwei Lagerhalbschalen (25-1, 25-2) aus unterschiedlichen Kunststoffmaterialen bestehen und in einem 2-K-Spitzgussverfahren hergestellt sind und wobei das Kunststoffmaterial des kugelförmigen Kopf (24), das in Berührung zu den beiden Lagerhalbschalen (25-1, 25-2) steht ein anderes Kunststoffmaterial ist, als das der beiden Lagerhalbschalen (25-1, 25-2).

2. Luftausströmer (1) nach Patentanspruch 1, **dadurch gekennzeichnet, dass** die Lagerschale (25) mit dem Einsatz (2) verbunden ist und die Lagerschale (25) Bewegungen des Einsatzes (2) mit ausführt.

3. Luf tausströmer (1) nach Patentanspruch 1 oder 2, **dadurch gekennzeichnet, dass** auf den Innenseiten der beiden die Lagerschale (25) bildenden Lagerhalbschalen (25-1, 25-2) mindestens jeweils eine Kunststoffschicht (29-1, 29-2) angeordnet ist, wobei die Kunststoffschicht (29-1, 29-2) aus silikonartigem Kunststoff besteht.

4. Luftausströmer (1) nach Patentanspruch 3, **dadurch gekennzeichnet, dass** die Ausgestaltung und die Materialwahl der Kunststoffschichten (29-1, 29-2), das Material des kugelförmigen Kopfes (24) und die auf die Lagerhalbschalen (25-1, 25-2) einwirkende Kraft der Feder (26) die Bedienkraft, welche zur Verdrehung, Verkippung und/oder Verschwenken des Einsatzes (2) aufzuwenden ist, definieren.

5. Luftausströmer (1) nach Patentanspruch einem oder mehreren der vorangehenden Patentansprüche, **dadurch gekennzeichnet, dass** die Feder (26) eine C-förmige Feder ist.

6. Luftausströmer (1) nach Patentanspruch einem oder mehreren der vorangehenden Patentansprüche, **dadurch gekennzeichnet, dass** am kugelförmigen Kopf (24), an der der Öffnung (7) zur Zuführung eines Luftstroms zugewandten Seite, eine Welle (21) fest angeordnet ist, wobei am Ende der Welle (21) ein Zahnrad (22) angeordnet ist.

7. Luftausströmer (1) nach Patentanspruch 6, **dadurch gekennzeichnet, dass** die Welle (21) eine Hohlwelle ist und die Welle (21) mit ihrer Mittenlängsachse auf der Mittenachse des Gehäuses (4) des Luftausströmers (1) liegt und die Welle (21) seitliche Aussparungen aufweist, und die Welle (21) über Haltestege (20) im Gehäuse (4) gehalten und drehbar gelagert ist.

8. Luftausströmer (1) nach Patentanspruch 7, **dadurch gekennzeichnet, dass** der kugelförmige Kopf (24) ein Hohlkopf ist und an der der Öffnung (8) zur Ausleitung des zugeführten Luftstroms zugewandten Seite einen Kugelring (11) ausbildet und der Hohlraum des kugelförmigen Kopfes (24)in den Hohlraum der Welle (21) übergeht.

9. Luftausströmer (1) nach Patentanspruch einem oder mehreren der vorangehenden Patentansprüche 7 und 8, **dadurch gekennzeichnet, dass** der Einsatz (2) einen ersten und einen zweiten Drehanschlag besitzt, die den Bereich, in dem der Einsatz (2) verdrehbar ist definieren und wobei der Drehbereich zum einen auf das Zahnrad (22) der Welle (21) und den Aussparungen der Welle (21) angepasst ist.

## Claims

1. Air vent (1) consisting of a housing (4) with at least one opening (7) for the supply of an air flow and an opening (8) for issue of the supplied air flow, wherein the air flow can be supplied to the air vent (1) from an air supply shaft or an air supply line in heating, ventilating or air conditioning installations, particularly for passenger compartments in motor vehicles, and the air vent (1) is insertable by the housing (4) into a wall passage or mountable behind such, wherein an insert (2), which is mounted to be rotationally and/or pivotably movable about a mounting, with at least one arrangement (3) for guidance and/or deflection of the supplied air flow and an element (5), which is arranged centrally in the insert (2) and is connected with the at least one arrangement (3; 9) for guidance and/or deflection of the supplied air flow, is arranged in the housing (4), and wherein the mounting is arranged on the centre longitudinal axis of the housing (4), the mounting is realised by means of a bearing (6) which consists of a bearing shell (25) in which a spherical element (24) lies, the element (24) being disposed in operative connection with the insert (2) when rotational movement of the insert (2) takes place, but not disposed in operative connection when pivotation or tipping of the insert (2) takes place, and an optical coupling between two optical conductors (17, 18), which serve for lighting the air vent (1), is realised in the bearing (6), **characterised in that** the bearing shell (25) is formed by two bearing half shells (25-1, 25-2), wherein the two bearing half shells (25-1, 25-2) are at least partly surrounded by a spring (26) and the bearing half shells (25-1, 25-2) enclose a spherical head (24), wherein the spherical head (24) has nubs (27) which lie between the two bearing half shells (25-1, 25-2) and wherein the two bearing half shells (25-1, 25-2) consist of different plastics materials and are produced in a two-component injecting-moulding process and wherein the plastics material of the spherical head (24), which is disposed in contact with the two bearing half shells (25-1, 25-2), is a plastics material different from that of the two bearing half shells (25-1, 25-2).

2. Air vent (1) according to claim 1, **characterised in that** the bearing shell (25) is connected with the insert (2) and the bearing shell (25) executes movements of the insert (2) conjunctively therewith.

3. Air vent (1) according to claim 1 or 2, **characterised in that** at least one respective plastics material layer (29-1, 29-2) is arranged on each of the inner sides of the two bearing half shells (25-1, 25-2) forming the bearing shell (25), wherein the plastics material layer (29-1, 29-2) consists of silicon-like plastics material.

4. Air vent (1) according to claim 3, **characterised in that** the form and material selection of the plastics material layers (29-1, 29-2), the material of the spherical head (28) and the force, which acts on the bearing half shells (25-1, 25-2) of the spring (26) define the operator force to be exerted for rotating, tilting and/or pivoting the insert (2).

5. Air vent (1) according to one or more of the preceding claims, **characterised in that** the spring (26) is a C-shaped spring.

6. Air vent (1) according to one or more of the preceding claims, **characterised in that** a shaft (21) is fixedly arranged at the spherical head (24) at the side facing the opening (7) for supply of an air flow, wherein a gearwheel (22) is arranged at the end of the shaft (21).

7. Air vent (1) according to claim 6, **characterised in that** the shaft (21) is a hollow shaft and the shaft (21) lies by the centre longitudinal axis thereof on the centre longitudinal axis of the housing (4) of the air vent (1), wherein the shaft (21) has lateral recesses and is retained and rotatably mounted in the housing (4) by way of mounting webs (20).

8. Air vent (1) according to claim 7, **characterised in that** the spherical head (24) is a hollow head and a ball ring (11) is formed at the side facing the opening (8) for issue of the supplied air flow, wherein the cavity of the spherical head (24) goes over into the cavity of the shaft (21).

9. Air vent (1) according to one or more of the preceding claims 7 and 8, **characterised in that** the insert (2) has a first and a second rotary abutment, which defines the range in which the insert (2) is rotatable, and wherein the rotational range is adapted on the one hand to the gearwheel (22) of the shaft (21) and the recesses of the shaft (21).

## Revendications

1. Diffuseur d'air (1) constitué d'un boîtier (4) muni d'au moins une ouverture (7) pour l'amenée d'un courant d'air et d'une ouverture (8) pour l'évacuation du courant d'air amené, le courant d'air pouvant être amené au diffuseur d'air (1) à partir d'un puits d'alimentation en air ou d'une conduite d'alimentation en air dans des installations de chauffage, de ventilation ou de climatisation, notamment pour habitacles dans des véhicules automobiles, et le diffuseur d'air (1) pouvant être inséré, avec le boîtier (4), dans un passage de paroi ou être monté derrière un tel passage, un insert (2) logé de manière rotative et/ou pivotante autour d'un logement, comprenant au moins un agencement (3 ; 9) destiné à guider et/ou dévier le courant d'air amené et un élément (5) disposé de manière centrale dans l'insert (2) étant disposé dans le boîtier (4), lequel élément est relié à l'au moins un agencement (3 ; 9) destiné à guider et/ou dévier le courant d'air, et le logement étant disposé sur l'axe médian longitudinal du boîtier (4), le logement étant réalisé au moyen d'un palier (6) qui est constitué d'un coussinet de palier (25), dans lequel se trouve un élément (24) sphérique qui, lors d'un mouvement de rotation de l'insert (2), est en liaison active avec l'insert (2), mais cependant, lors d'un pivotement ou basculement de l'insert (2), n'est pas en liaison active, et un couplage, au point de vue éclairage, de deux fibres optiques (17, 28), lesquelles servent à l'éclairage du diffuseur d'air (1), étant réalisé dans le palier (6), **caractérisé en ce que** le coussinet de palier (25) est formé par deux demi-coussinets de palier (25-1, 25-2), les deux demi-coussinets de palier (25-1, 25-2) étant entourés au moins en partie par un ressort (26) et les demi-coussinets de palier (25-1, 25-2) entourant une tête (24) sphérique, la tête (24) sphérique présentant des nopes (27) qui se trouvent entre les deux demi-coussinets de palier (25-1, 25-2), et les deux demi-coussinets de palier (25-1, 25-2) étant constitués de différentes matières plastiques et étant fabriqués par un procédé de moulage par injection de deux composants, et la matière plastique de la tête (24) sphérique, qui est en contact avec les deux demi-coussinets de palier (25-1, 25-2), étant une autre matière plastique que celle des deux demi-coussinets de palier (25-1, 25-2).

2. Diffuseur d'air (1) selon la revendication 1, **caractérisé en ce que** le coussinet de palier (25) est relié à l'insert (2) et **en ce que** le coussinet de palier (25) exécute aussi des mouvements de l'insert (2).

3. Diffuseur d'air (1) selon la revendication 1 ou 2, **caractérisé en ce qu'**au moins une couche de matière plastique (29-1, 29-2) est respectivement disposée sur les côtés intérieurs des deux demi-coussinets de palier (25-1, 25-2) formant le coussinet de palier (25), la couche de matière plastique (29-1, 29-2) étant constituée de matière plastique de type silicone.

4. Diffuseur d'air (1) selon la revendication 3, **caractérisé en ce que** la conception et la sélection de matière des couches de matière plastique (29-1, 29-2), la matière de la tête (24) sphérique et la force du ressort (26) agissant sur les demi-coussinets de palier (25-1, 25-2) définissent la force de commande qui est à appliquer pour la rotation, le basculement et/ou le pivotement de l'insert (2).

5. Diffuseur d'air (1) selon l'une quelconque ou plusieurs des revendications précédentes, **caractérisé en ce que** le ressort (26) est un ressort en forme de C.

6. Diffuseur d'air (1) selon l'une quelconque ou plusieurs des revendications précédentes, **caractérisé en ce qu'**un arbre (21) est disposé de manière fixe sur la tête (24) sphérique, sur le côté tourné vers l'ouverture (7) d'amenée d'un courant d'air, une roue dentée (22) étant disposée à l'extrémité de l'arbre (21).

7. Diffuseur d'air (1) selon la revendication 6, **caractérisé en ce que** l'arbre (21) est un arbre creux et **en ce que** l'arbre (21), avec son axe médian longitudinal, se trouve sur l'axe médian du boîtier (4) du diffuseur d'air (1) et **en ce que** l'arbre (21) présente des évidements latéraux, et **en ce que** l'arbre (21) est maintenu dans le boîtier (4) par l'intermédiaire de nervures de maintien (20) et est logé de manière rotative.

8. Diffuseur d'air (1) selon la revendication 7, **caractérisé en ce que** la tête (24) sphérique est une tête creuse et forme un anneau sphérique (11) sur le côté tourné vers l'ouverture (8) d'évacuation du courant d'air amené, et **en ce que** l'espace creux de la tête (24) sphérique se transforme en espace creux de l'arbre (21).

9. Diffuseur d'air (1) selon l'une quelconque ou plusieurs des revendications 7 et 8, **caractérisé en ce que** l'insert (2) possède une première et une deuxième butées de rotation, lesquelles définissent la zone dans laquelle l'insert (2) est rotatif, et la zone de rotation étant adaptée d'une part à la roue dentée (22) de l'arbre (21) et aux évidements de l'arbre (21).
